# EUROPEAN PATENT APPLICATION

(11) **EP 2 046 005 A1**
(43) Date of publication of application: **08.04.2009**
(21) Application number: 07721178.7
(22) Date of filing: 17.05.2007
(51) Int. Cl.: H04M 3/30, H04B 3/46

(54) **DEVICE,SYSTEM AND METHOD FOR DIAGNOSING THE CONNECTIVITY OF DSL**

(30) Priority: 11.08.2006 CN 200610062118
(71) Applicant: Huawei Technologies Co., Ltd., Shenzhen, Guangdong Province 518129 (CN)
(72) Inventor: ZHANG, Hao, Guangdong 518129 (CN); WANG, Binfeng, Guangdong 518129 (CN); YAN, Linzhi, Guangdong 518129 (CN); SONG, Liyuan, Guangdong 518129 (CN); ZHANG, Jian, Guangdong 518129 (CN); LIN, Zhongyu, Guangdong 518129 (CN); WANG, Jingfeng, Guangdong 518129 (CN)
(74) Representative: Rigler, Johann
(86) International application number: PCT/CN2007/001605
(87) International publication number: WO 2008/019560

(57) **Abstract**

A system and method for diagnosing the connectivity of DSL transceiver are disclosed. The DSL transceiver comprises xTU-C and xTR-R, and the system comprises message collection module and fault analysis module. The message collection module collects and stores the interworking messages of the xTU-C and xTR-R in the initialization process; The fault analysis module analyses the messages which have been collected and stored, and then determines the conclusion about the connectivity of DSL. The invention resolves the connectivity of the different xTU-C and xTR-R, simplifies the process flow, improves the efficiency, and reduces the cost. Furthermore, the device For diagnosing the connectivity of DSL transceiver is disclosed.

## Description

This application claims priority of Chinese Patent Application No. 2006 10062 118.2, filed on August 11, 2006, entitled "System and Method for Diagnosing Interworking Fault of × Digital Subscriber Line Transceivers", the content of which is incorporated herein by reference in its entirety.

### Field of the invention

The present invention relates to a system and method for diagnosing a communication device, and in particular to a device, system and method for diagnosing an interworking fault of x Digital Subscriber Line (xDSL) transceivers.

### Background of the invention

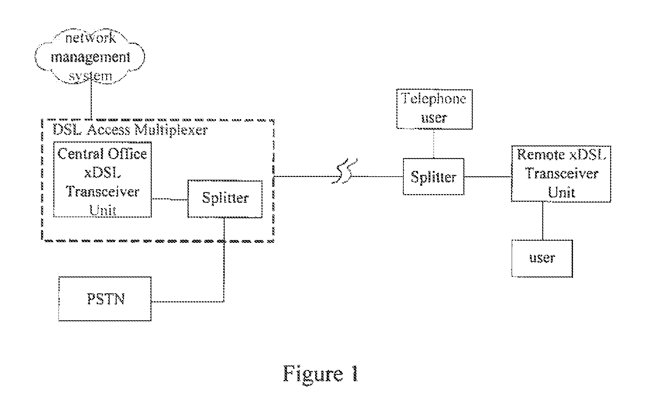

xDSL is the total name of various kinds of DSLs, and is a high-spced data transmission technology using a telephone twisted-pair (Unshielded Twist Pair, UTP) to perform transmission. Other than a baseband transmission DSL, such as an ISDN Digital Subscriber Line (IDSL) and a Single-pair High Speed DSL (SHDSL), with a passband transmission xDSL, the xDSL service and the Plain Ordinary Telephone Switching (POTS) service can coexist in the same twisted line by using the Frequency Division Multiplexing technology. Here, the xDSL service occupies a high frequency band, and the POST service occupies a baseband bellow 25KHz, and the POTS signal and the xDSL signal are split by a splitter. The passband transmission xDSL employs the Discrete Multi Tone (DMT) modulation. A system allowing multiple xDSLs to access is referred to as a DSL Access Multiplexer (DSLAM), a reference system model of which is shown as figure 1. Both a Central Office and a terminal (i.e. a remote end) need to separate a low frequency signal of the POTS from a high frequency signal of the xDSL through a splitter. An activation training interaction process defined by a standard is performed on the DSL by transceiver units of the Central Office and the terminal, and the transceiver units are capable of data communicating once the activation succeeds.

The development of the xDSL technology is so fast that it is only four or five years from the beginning of ADSL to the arising of ADSL2+. The Very-high-bit-rate Digital Subscriber Line 2 (VDSL2) is expected to mature and to be in commercial use in the end of 2006 or the beginning of 2007, Thus, in near future, the ADSL, ADSL2/2+ and VDSL2 will coexist in the Central Office devices in the network. The existing Remote xDSL Terminal Unit (xTU-R) for the ADSL and ADSL2+ in the network could still be in use. Since the ADSL/ADSL2+ technology is different relatively significantly from the VDSL2 technology not only in the speed (the maximum downstream rate of the ADSL is 8M and the maximum downstream rate of the ADSL2+ is 24M, whereas a symmetrical achievable rate of the VDSL is approximately 100M), but also in some characteristic parameters such as Power Spectrum Density (PSD) shaping and spectrum notching. In order to implement the coexistence of various modes of the xDSL transceivers (including a Central Office xDSL Terminal Unit (xTU-C) and xTU-R), a later Central Office device is required to be compatible with the previous mode, that is, to support a plurality of xDSL modes.

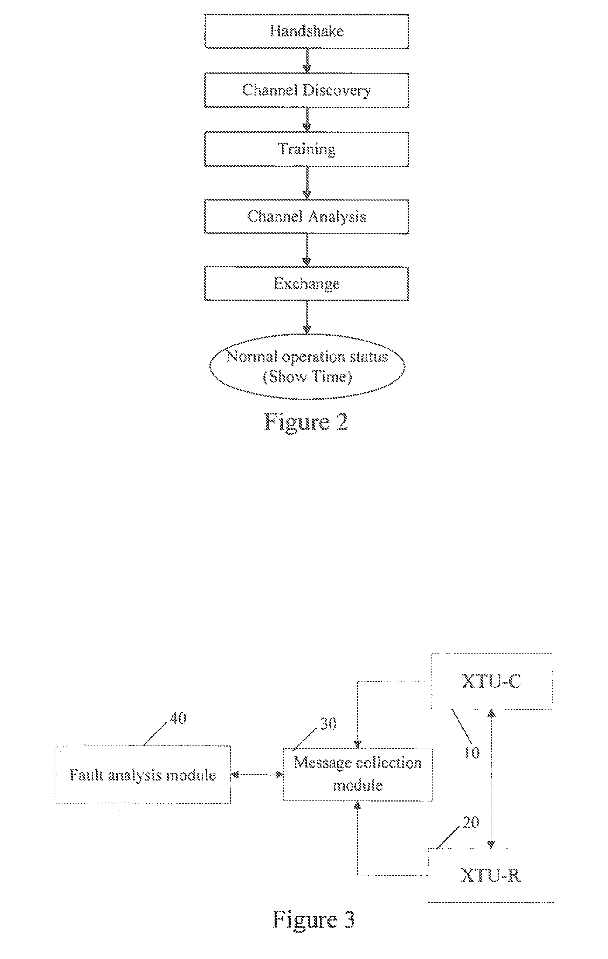

During an activation process, i.e. an initialization process, an xTU-C and an xTU-R measure and analyze conditions of a channel, then negotiate parameters required for establishing a connection in accordance with a certain rule, and finally establish a connection according to the negotiation result. Taking an activation process for the VDSL2 as an example, the initialization procedure of the xDSL is shown in Figure 2. An xDSL transceiver undergoes phases of handshake, channel discovery, training, channel analysis and exchange (together referred to as an initialization process or an activation process) from being startup to a normal operation status, and finally reaches the normal operation status (Show Time). Upon accomplishing the initialization process, the xTU-C and xTU-R enter a normal operation status phase to transmit service data.

Different information exchanged between an xTU-C and an xTU-R during the xDSL activation process is distinguished with different kinds of messages, which are described respectively in detail in the corresponding xDSL standards. During the activation process, an operation mode, a line transmission parameter, a framing parameter, and supportable properties that are necessary to transmit the xDSL service are finally determined through message exchanging.

An entire activation process is very complicated, and any error in time length or a signal transmitted in any phase may lead to a fault. Further, mutual influence exists on the parameters exchanged, and a certain relationship between the parameters needs to be satisfied; otherwise, an interworking fault may also occur. Because various manufacturers of an xDSL chip or device have different understandings for respective xDSL standards, and support the xDSL standards to different extents, a lot of interworking faults between an xTU-C and an xTU-R will occur in practice in particular with a commercial use of the VDSL2. The interworking faults mainly include: a failure of normal activation, an unstable activation, easy to drop, an unideal activation parameter, for example, a very low rate of an activated line.

For the interworking fault between the xTU-C and the xTU-R, there are following two solutions in the prior art.

One technical solution in the prior art is described in detail as follows

Presently, a commercial DSLAM device typically offers a way of viewing remotely a log of the device. The device maintenance personnel log on the device remotely, view an operation log and an alarm log recorded in the device, and analyze the personnel operation record and the abnormal situation record of the device when a certain xDSL line fails (for example, which service line fails, and if any abnormality exists in the line status changes and the traffic). However, the existing way of locating a fault by checking a log has a limited function in that generally only a fault due to an incorrect operation on the device by unskilled personnel can be diagnosed, or device status when a fault occurs is to be recorded for assisting maintenance personnel to reproduce the fault and then a diagnosis is performed in another way. Such technology can not be used to automatically analyze the collected data to come up with a conclusion, and this has a high request of technology experience for maintenance personnel, resulting in low efficiency. This technology can not be used to diagnose an interworking fault of xDSL. transceivers caused by the device and can not determine whether a fault of a Central Office device or that of a terminal device leads to an activation failure for both the Central Office device and the terminal device.

Another solution in the prior art is described in detail as follows.

In the case that a fault occurs to an xDSL operating in a global telecommunication broadband access network, if it is determined that this failure is due to an interworking fault instead of an interference of the line environment or a mistake in manual manipulation, the current diagnosing technology includes: collecting information to analyze by personnel being familiar with the ADSL/VDSL related standards and interaction information at the accident scene: or analyzing and locating the failure by reproducing it, with the Central Office xDSL line card device or device delivered to the manufacturer. This needs a special debugging tool to be connected to the device to collect data in real time, and analysis is performed with experience by referring to standards. In this solution, it has a high request for an engineer diagnosing the fault in technology, the cost for transporting personnel and materials is high, and a debugging tool needs to be connected to the device. Generally, diagnosis of an interworking fault of a certain xDSL subscriber line may result in an interruption of formal service of other subscriber line. Such diagnosis of an interworking fault of the xDSL is low in efficiency, which is disadvantageous for both device provider and operator.

### Summary of the invention

The embodiments of the present invention are intended to provide a device, a system, and a method for diagnosing an interworking fault of x Digital Subscriber Line (xDSL) transceivers to enable device maintenance personnel to locate and resolve the interworking fault of xDSL transceivers rapidly and effectively.

A technical solution of an embodiment of the invention is as follows.

An xDSL transceiver, which includes a message collection module adapted to collect and save an interaction message transmitted between a Central Office xDSL Terminal unit (xTU-C) and a Remote xDSL Terminal Unit (xTU-R) during an activation process for an xDSL line; and a fault analysis module adapted to analyze the collected interaction message to come up with a first diagnosis conclusion with respect to interworking fault.

An xDSL transceiver, which includes a message collection module adapted to collect and save an interaction message transmitted between a Central Office xDSL Terminal unit (xTU-C) and a Remote DSL Terminal Unit (xTU-R) during an activation process for an xDSL line; and a preliminary fault analysis module adapted to analyze preliminarily the collected interaction message to come up with a second diagnosis conclusion with respect to interworking fault.

A system for diagnosing an interworking fault of xDSL transceivers, which includes xDSL. The xDSL transceivers include an xTU-C and an xTU-K The system further includes a message collection module and a fault analysis module.

The message collection module is adapted to collect and save an interaction message transmitted between an xTU-C and an xTU-R during an activation of an xDSL line;

The fault analysis module is adapted to analyze the collected interaction message to come up with a first diagnosis conclusion with respect to an interworking fault.

A method for diagnosing an intervorking fault of xDSL transceivers is provided, including the following steps: collecting and saving an interaction message transmitted between an xTU-C and an xTU-R during an activation of an xDSL line; and analyzing the collected interaction message to come up with a first diagnosis conclusion with respect to an interworking fault.

Because the system for diagnosing an interworking fault of xDSL transceivers according to an embodiment of the invention includes a message collection module and a fault analysis module, the interaction message transmitted between an xTU-C and an xTU-R during an activation can be collected and saved by the message collection module, and the collected interaction message is analyzed by the fault analysis module, so as to come up with a first diagnosis conclusion with respect to an interworking fault. Therefore, the embodiment of the invention can resolve effectively an interworking fault of different xDSL transceivers. i.e., an xTU-C and an xTU-R, thereby simplifying the process flow and giving convenience for operators and telecommunication device maintenance personnel, with work load and difficulties reduced, efficiency improved, and cost saved.

### Brief Descriptions of the Drawings

Fig.1 is a schematic diagram of an xDSL system reference model in the prior art;

Fig.2. is a schematic diagram of an initialization process for an xDSL in the prior art;

Fig.3 is a schematic diagram of a system for diagnosing an interworking fault for the xDSL transceivers according to one embodiment of the invention;

Fig.4 is a schematic diagram of a system for diagnosing an interworking fault for the xDSL transceivers according to one embodiment of the invention: and

Fig.5 is a flowchart illustrating a method for diagnosing an interworking fault for the xDSL transceivers according to one embodiment of the invention.
Detailed Descriptions of the Embodiments

A cause corresponding to an interworking fault emerged in xDSL transceivers can generally be determined through analyzing an interaction message transmitted between an xTU-C and an xTU-R during an activation process for an xDSL line.

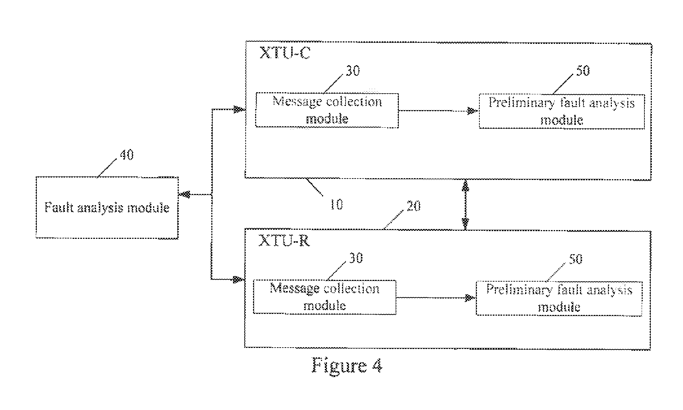

Referring to figure 3 and figure 4, a system for diagnosing an interworking fault for an xDSL transceivers according to an embodiment of the invention includes xDSL transceivers, which include an xTU-C 10 (i.e., an xDSL line card in a DSLAM device) and an xTU-R 20. The system further includes a message collection module 30 and a fault analysis module 40. The message collection module 30 is adapted to collect and save interaction messages transmitted between the xTU-C 10 and the xTU-R 20 during the activation process for an xDSL line, and the fault analysis module 40 is adapted to analyze the collected interaction messages to obtain a first diagnosis conclusion with respect to the interworking fault.

The system may also include a command input device or/and a diagnosis result display device (not shown). The command input device is adapted to transmit the received diagnosis command to the fault analysis module 40 and/or an preliminary fault analysis module in the xDSL transceiver, and the diagnosis result display device is adapted to display for a user a diagnosis conclusion generated by the faults analysis module 40 and/or the preliminary fault analysis module.

Both the message collection module 30 and the fault analysis module 40 may be arranged outside the xDSL transceiver, as shown in Figure 3; or both of them may be arranged in the xDSL transceiver (not shown); or the message collection module 30 is arranged in the xDSL transceiver, while the fault analysis module 40 is arranged outside the xDSL transceiver, as shown in Figure 4.

In the case that the fault analysis module 40 is arranged outside the xDSL transceiver, the xDSL transceiver is also provided inside with a preliminary fault analysis module 50, as shown in Figure 4. The preliminary fault analysis module 50 is adapted to analyze preliminarily the collected interaction message to obtain a second diagnosis conclusion with respect to the interworking fault. The second diagnosis conclusion is simpler and more preliminary than the first diagnosis conclusion. The fault analysis module 40 remotely analyzes the interaction message collected by the xDSL transceiver to obtain a first diagnosis conclusion with respect to the interworking fault. The first diagnosis conclusion with respect to the interworking fault is made by the fault analysis module 40 according to features and relations of the messages in a Corresponding stage described in the xDSL standard adopted by the fault analysis module 40.

The fault analysis module 40 of the embodiment of the invention may be a computer installed with interworking fault diagnosis software.

In the case that the fault analysis module 40 is arranged outside the xDSL transceiver, the fault analysis module 40 is connected to the xDSL transceiver directly or via a communication network which may be a fixed communication network or a wireless communication network and the like.

It will be appreciated that an embodiment of the invention further provides an xDSL transceiver including: a message collection module adapted to collect and save interaction messages transmitted between an xTU-C and an xTU-R during an activation process for an xDSL line; and a fault analysis module adapted to analyze the collected interaction messages to obtain a first diagnosis conclusion with respect to an interworking fault.

The xDSL transceiver may further include a message viewing module for receiving an operation command, and displaying the interaction messages to allow a user to view and obtain the messages.

Further, as shown in Figure 4, an embodiment of the invention further provides the xDSL transceiver which includes a message collection module adapted to collect and save an interaction message transmitted between an xTU-C and an xTU-R during the activation process for an xDSL line; and a preliminary fault analysis module adapted to analyze preliminarily the collected interaction messages to obtain a second diagnosis conclusion with respect to the interworking fault

The above xDSL transceivers may further include a message viewing module for receiving an operation command, and displaying the interaction messages to allow a user to view and obtain the messages.

Each of the above two kinds of xDSL transceivers can serve as a Central Office xDSL Terminal unit (xTU-C) or a Remote xDSL Terminal Unit (xTU-R).

A method for diagnosing an intervorking fault of the xDSL transceivers according to one embodiment of the invention includes includes;

step A: the message collection module collects and saves interaction messages transmitted between the xTU-C and the xTU-R during the activation process for an xDSL line;

step B: the preliminary fault analysis module and/or the fault analysis module analyze the collected interaction messages to obtain a first diagnosis conclusion with respect to the interworking fault.

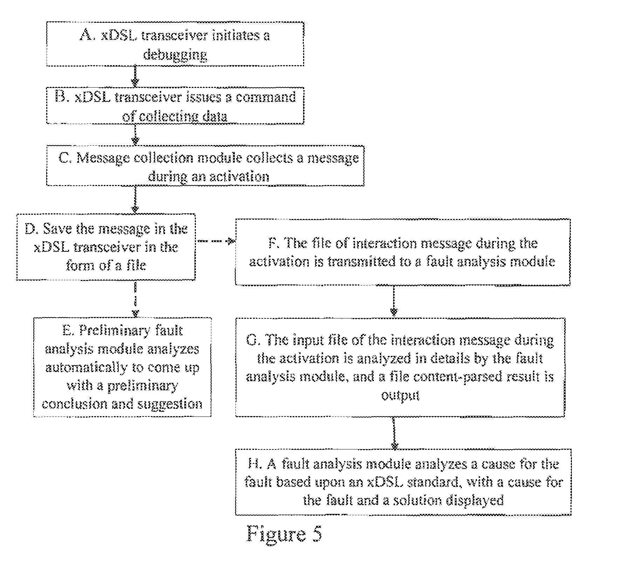

Referring to figure 5, an implementation of diagnosing an interworking fault of the xDSL transceivers according to one embodiment of the invention will be described in detail below taking an example with the message collection module located in the xDSL transceiver, the implementation includes:

Step A: the xDSL transceiver initiates a debugging.

Step B: The xDSL transceiver issues a command for collecting data.

Step C: The message collection module collects the interaction message transmitted between the xTU-C and the xTU-R during the activation process for an xDSL line.

Step D: The interaction messages are saved in the storage medium of the xTU-C and the xTU-R. For example, the xDSL transceivers are an xDSL line card in the DSLAM device and an xTU-R., then the step D in particular includes: the xDSL line card transmits, via an internal management path of the DSLAM device, the interaction messages to a main control card management unit in the DSLAM device, and saves the interaction messages in the storage medium in the main control card of the Central Office device; the xTU-R saves the interaction messages in the storage medium of the xTU-R; the xDSL transceivers provides an operation command to allow a user to obtain and view the interaction messages, Here, the interaction messages are saved in the form of a file is only an embodiment, while in practice, the saving can be performed in other forms.

Step E: the preliminary fault analysis module analyzes preliminarily the collected interaction messages to obtain a second diagnosis conclusion with respect to the interworking fault. The second diagnosis conclusion is simpler and more preliminary than the first diagnosis conclusion, for example, the second diagnosis conclusion may include that a configuration parameter is unreasonable, or a standard parameter is not supported by the device and so on.

Step F: If the fault can not be resolved in step E, the file of the interaction messages, saved in the xDSL transceiver, transmitted between an xTU-C and an xTU-R during the activation of the failed xDSL line, is transmitted to the fault analysis module by the device maintenance personnel.

Step G: The file of the interaction messages is analyzed in detail by the fault analysis module, and the time for receiving/sending each of the interaction messages transmitted during the activation process, the type of the message, the current stage of the activation, and content of main parameters contained in the message and the like are displayed via a friendly visual interface to allow an analysis by a user, That is, before the fault analysis module determines a final first diagnosis conclusion with respect to the interworking fault, the time for receiving/sending each of the interaction messages transmitted during the activation process, the type of the message, the current stage of the activation, and content of main parameters contained in the message and the like can also be displayed.

Step H: The fault analysis module judges the cause for the interworking fault according to features and relations of messages in a corresponding stage described in the xDSL standard adopted by the fault analysis module, to obtain the first diagnosis conclusion with respect to the interworking fault including, for example, whether a stage time does not comply with the xDSL standard, whether the xTU-C or xTU-R does not support the characteristic required by a user, and whether the configured parameters can not be achieved together and the like. Finally, the cause for the xDSL interworking fault and available measures are prompted via a friendly interface, to which a user can refer so as to resolve the fault.

By using the system and method for diagnosing an interworking fault of xDSL transceivers according to the embodiments, the fault can be located rapidly and the solution can be proposed, so as to resolve effectively the interworking fault between different xDSL transceivers, i.e. the xTU-C and the xTU-R, which brings convenience for the telecommunication service operators and the telecommunication device maintenance personnel and reduces the cost,

The above are merely preferred embodiments of the invention presented for the purpose of illustrating the present invention and are not intended to limit the scope of the invention. Any modifications, equivalents, and improvements without departing from the spirit and principle of the invention are intended to be within the claimed scope of the invention.

## Claims

1. An x Digital Subscriber Line (xDSL) transceiver, comprising:
a message collection module adapted to collect and save an interaction message transmitted between a Central Office xDSL Terminal Unit (xTU-C) and a Remote xDSL Terminal Unit (xTU-R.) during an activation process for an xDSL line; and
a fault analysis module adapted to analyze the collected interaction message to obtain a first diagnosis concision with respect to an interworking fault.

2. The xDSL transceiver according to claim 1, further comprising a message viewing module adapted to receive an operation command and to display the interaction message to allow a user to view and obtain the message.

3. The xDSL transceiver according to claim I or 2, wherein the xDSL transceiver is an xTU-C or an xTU-R.

4. An x Digital Subscriber Line (xDSL) transceiver, comprising:
a message collection module adapted to collect and save an interaction message transmitted between a Central Office xDSL Terminal Unit (xTU-C) and a Remote xDSL Terminal Unit (xTU-R) during an activation process for an xDSL line; and
a preliminary fault analysis module adapted to analyze the interaction message to obtain a second diagnosis conclusion with respect to an interworking fault.

5. The xDSL transceiver according to claim 4, further comprising a message viewing module adapted to receive an operation command, and to display the interaction message to allow a user to view and obtain the message.

6. The xDSL transceiver according to claim 4 or 5, wherein the xDSL transceiver is an xTU-C or an xTU-R.

7. A system for diagnosing an interworking fault of xDSL transceivers, comprising xDSL transceivers including a Central Office xDSL Terminal Unit (xTU-C) and a Remote xDSL Terminal Unit (xTU-R), wherein the system further comprises a message collection module and a fault analysis module, and the message collection module is adapted to collect and save an interaction message transmitted between the xTU-C and the xTU-R during an activation process for an xDSL line,
the fault analysis module is adapted to analyze the collected interaction message to obtain a first diagnosis conclusion with respect to an intervorking fault.

8. The system according to claim 7, wherein both the message collection module and the fault analysis module are within the xDSL transceiver: or both are arranged outside the xDSL transceiver: or the message collection module is within the xDSL transceiver, while the fault analysis module is arranged outside the xDSL transceiver.

9. The system according to claim 8, wherein if the fault analysis module is arranged outside the xDSL transceiver, the xDSL transceiver is also provided inside with a preliminary fault analysis module adapted to analyze preliminarily the collected interaction message to obtain a second diagnosis conclusion with respect to the interworking fault, while the fault analysis module analyzes remotely the interaction message collected by the xDSL transceiver to obtain a first diagnosis conclusion with respect to the interworking fault

10. The system according claim 7, wherein the first diagnosis conclusion with respect to the interworking fault is made by the fault analysis module according to features and relations of messages in a corresponding stage described in the xDSL standard adopted by the fault analysis module.

11. The system according to claim 7 or 9, further comprising a command input means or/and a diagnosis result display means, wherein
the command input means is adapted to transmit the received diagnosis command to the fault analysis module and/or the preliminary fault analysis module; and
the diagnosis result display means is adapted to display for a user a diagnosis conclusion generated by the fault analysis module and/or the preliminary fault analysis module,

12. A method for diagnosing an interworking fault of xDSL transceivers, comprising:
collecting and saving an interaction message transmitted between a Central Office xDSL Terminal Unit (xTU-C) and a Remote xDSL Terminal Unit (xTU-R) during an activation process for an xDSL line: and
analyzing the collected interaction message to obtain a first diagnosis conclusion with respect to the interworking fault.

13. The method according to claim 12, wherein the message to be analyzed is collected by a message collection module.

14. The method according to claim 12, wherein the analyzing is performed by a preliminary fault analysis module and/or a faults analysis module.

15. The method according to claim 13. wherein if the message collection module is within the xDSL transceiver, the process of collecting and saving an interaction message between an xTU-C and an xTU-R during an activation process for an xDSL line comprises:
initiating, by the xDSL transceiver, a debugging, and issuing a command for collecting data,
collecting, by the message collection module, the interaction message transmitted between the xTU-C and the xTU-R during the activation process for the xDSL line; and
saving the interaction message transmitted during the activation process into storage medium of the xTU-C and the xTU-R.

16. The method according to claim 15, wherein if the xDSL transceivers are an xDSL line card in a DSLAM device and an xTU-R, the process of saving the interaction message comprises:
transmitting, by the xDSL line card, via an internal management path of the DSLAM device, the interaction message transmitted during the activation process, from the xDSL line card to a main control card management unit in the device, and saving the interaction message in the storage medium on the main control card of the Central Office device: while the xTU-R saves directly the interaction message transmitted during the activation process into its storage medium; and
the xDSL transceivers further provide an operation command to allow a user to obtain and view the interaction message,

17. The method according to claim 14, wherein when the collected interaction message is analyzed by the fault analysis module, the process of analyzing the collected interaction message to obtain a first diagnosis conclusion with respect to the interworking fault comprises:
transmitting a file of the interaction message, saved in the xDSL transceiver, transmitted between the xTU-C and the xTU-R during the activation process for a failed xDSL line, to the fault analysis module;
analyzing, by the fault analysis module, the input file of the interaction message transmitted during the activation process; and
judging, by the fault analysis module, a cause for the interworking fault, according to features and relations of messages in a corresponding stage described in the xDSL standard adopted by the fault analysis module, and prompting the cause for the xDSL interworking fault and available measures, obtaining a first diagnosis conclusion with respect to the interworking fault.

18. The method according to claim 17, further comprising a process for displaying a time for receiving/sending the interaction message transmitted during the activation process, a type of the message, a current stage of the activation, and content of main parameters contained in the message before the fault analysis module obtains a first diagnosis conclusion with respect to an interworking fault.

19. The method according to claim 14, further comprising a process for analyzing preliminarily the collected interaction message to obtain a second diagnosis conclusion with respect to the interworking fault by the preliminary fault analysis module when the collected interaction message is analyzed by the preliminary fault analysis module.
